# EUROPÄISCHE PATENTSCHRIFT

(11) **EP 2 161 595 B1**
(45) Veröffentlichungstag und Bekanntmachung des Hinweises auf die Patenterteilung: **31.10.2012**
(21) Anmeldenummer: 09009706.4
(22) Anmeldetag: 28.07.2009
(51) Int. Cl.: G01V 8/10

(54) **Optischer Sensor**
Optical sensor
Capteur optique

(30) Priorität: 03.09.2008 DE 102008045591
(43) Veröffentlichungstag der Anmeldung: 10.03.2010
(73) Patentinhaber: Leuze electronic GmbH + Co. KG, 73277 Owen/Teck (DE)
(72) Erfinder: Klaiber, Jörg, 71157 Hildrizhausen (DE)
(74) Vertreter: Ruckh, Rainer Gerhard

(56) Entgegenhaltungen:
- EP-A- 0 867 732
- EP-A- 1 139 080
- DE-A1- 3 834 757
- DE-A1- 4 438 798
- DE-U1-202005 003 051
- FR-A- 2 923 009

## Beschreibung

Die Erfindung betrifft einen optischen Sensor.

Derartige optische Sensoren weisen zur Erfassung von Objekten typischerweise als photoelektrisches Element einen Lichtstrahlen emittierenden Sender und einen Lichtstrahlen empfangenden Empfänger auf, welche in einem gemeinsamen oder in getrennten Gehäusen integriert sind.

In dem jeweiligen Gehäuse ist ein Fenster in eine Gehäuseöffnung eingesetzt, durch welches die vom Sender emittierten beziehungsweise die auf den Empfänger auftreffenden Lichtstrahlen geführt sind.

Im Idealfall ist das Fenster in die Gehäuseöffnung exakt so eingepasst, dass die Außenfläche des Fensters bündig mit der angrenzenden Außenfläche des Gehäuses abschließt, so dass sich beide Außenflächen zu einer vorzugsweise ebenen Fläche ergänzen.

Aufgrund unvermeidbarer Toleranzen von Bauteilen und Ungenauigkeiten in fertigungstechnischen Prozessen werden die Fenster in der überwiegenden Anzahl von Einbauten im Gehäuse nicht exakt in dieser Sollposition angeordnet sein.

Demzufolge wird in der Praxis das Fenster gegenüber der Außenwand des Gehäuses entweder etwas zurückgesetzt sein und so eine lokale Vertiefung bilden, oder gegenüber der Außenwand des Gehäuses etwas nach vorne versetzt sein und so einen über die Außenwand des Gehäuses hervorstehenden Überstand bilden.

Im ersten Fall lagern sich Verschmutzungen in der Vertiefung, das heißt auf der Oberseite des Fensters, ab. Damit ist die Durchlassfunktion für die Lichtstrahlen, die das transparente Fenster bestimmungsgemäß übernehmen muss, nicht mehr oder nicht mehr ausreichend gegeben. Dies führt dazu, dass von einem Sender emittierte Lichtstrahlen oder auf einen Empfänger zu führende Lichtstrahlen das Fenster nicht mehr ungehindert durchdringen können.

Der zweite Fall, dass das Fenster einen Überstand bildet, ist insbesondere dann kritisch, wenn zu detektierende Objekte auf dem Gehäuse mit dem Fenster aufliegend gefördert werden. Ein Beispiel hierfür sind Etikettenbänder, das heißt bandförmige Trägermaterialien auf welchen zu detektierende Etiketten aufgebracht sind. Da das Fenster über die Außenwand des Gehäuses hervorsteht, bildet dies ein Hindernis für die bewegten Objekte, so dass dort ein Abrieb an den Objekten erfolgt, der zu Ablagerungen am Fenster führt, wodurch wiederum dessen optische Eigenschaften negativ beeinflusst werden.

Aus der EP 1 139 080 A2 ist ein Infrarot-Sensorelement bekannt, das ein photoelektrisches, lichtempfangendes Element aufweist, das in einem Gehäuseelement integriert ist. In einer vertieft liegenden Aussparung des Gehäuseelements ist eine Linse eingesetzt, die tiefer liegt als die sie umgehenden oberen Flanken des Gehäuseelements.

Ein entsprechendes Sensorelement ist in der FR 2 923 009 A1 beschrieben.

Die DE 20 2005 003 051 U1 betrifft eine optoelektronische Sensoreinrichtung, zur Erfassung eines Objekts mit einem oder mehreren Lichtsendern auf einer Seite einer Überwachungsstrecke und einem oder mehreren, mit dem Lichtsender korrespondierenden Lichtempfänger auf der anderen Seite der Überwachungsstrecke. Die Lichtsender senden ein Lichtbündel mit einem Sendekegelwinkel in die Überwachungsstrecke aus. Die Lichtempfänger nehmen das Lichtbündel innerhalb eines Empfangskegelwinkels auf und wandeln sie in elektrische Größen um. Diese werden einer Auswerteschaltung zugeführt, die im Falle des Vorhandenseins eines Objekts in der Überwachungsstrecke ein Erkennungssignal abgibt. Die Sendekegelwinkel der ausgesandten Lichtbündel und Empfangskegelwinkel der Lichtempfänger werden mit einer Vorsatzoptik, die am Lichtsender und/oder am Lichtempfänger zusätzlich aufgebracht werden können, verändert.

Der Erfindung liegt die Aufgabe zugrunde, für einen optischen Sensor eine Optikabdeckung bereitzustellen, die reproduzierbare, störunanfällige optische Eigenschaften aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten mit einem in einem Gehäuse integrierten Lichtstrahlen emittierenden photoelektrischen Element und einem Lichtstrahlen empfangenden photoelektrischen Element. Jedem dieser photoelektrischen Elemente ist eine Optikabdeckung sowie sowie einer im Gehäuse integrierten Auswerteeinheit vorgeordnet, in welcher ein Objektfeststellungssignal generiert wird. Die Objektabdeckung weist ein von ihrer ebenen Oberseite hervorstehendes zylindrisches Segment auf, dessen oberer Rand eine Lichtdurchtrittsfläche bildet, durch welche die Lichtstrahlen geführt sind und deren Querschnitt an den Strahlquerschnitt der Lichtstrahlen angepasst ist. Das zylindrische Segment ist von einer Abdeckfläche umschlossen, wobei die Lichtdurchtrittsfläche über die Abdeckung so hervorsteht, dass sich auch starke Verschmutzungen allein auf der Abdeckfläche nicht jedoch auf der Lichtdurchtrittsfläche ablagern. Es ist eine die Abdeckfläche umschließende Randeinfassung vorgesehen, die einen über die Abdeckfläche und die Lichtdurchtrittsfläche hervorstehenden Rand aufweist, so dass ein Objekt nur in Kontakt mit dem Rand der Randeinfassung kommt, nicht jedoch mit der Lichtdurchtrittsfläche.

Der Grundgedanke der Erfindung besteht darin, dass die Lichtdurchtrittsfläche einerseits gegenüber der Abdeckfläche höher liegt und andererseits gegenüber dem Rand der Randeinfassung tiefer liegt, wodurch ein doppelter Schutz der Lichtdurchtrittsfläche gegenüber mechanischen Beeinträchtigungen, insbesondere Verschmutzungen, erzielt wird.

Ein erster wesentlicher Aspekt der Erfindung besteht dabei darin, dass die Lichtdurchtrittsfläche über die Abdeckfläche hervorsteht, das heißt die Lichtdurchtrittsfläche ragt über eine Vertiefung hervor, die von der Abdeckfläche begrenzt wird. Im Betrieb des optischen Sensors lagern sich Verschmutzungen in dieser Vertiefung ab, nicht jedoch an der über die Vertiefung nach oben hervorstehende Lichtdurchtrittsfläche, so dass deren optische Funktion nicht beeinträchtigt wird. Die Abdeckfläche selbst ist im Gegensatz zu der Lichtdurchtrittsfläche nicht transparent ausgebildet, so dass diese eine Blendenfunktion für die Lichtstrahlen derart aufweist, dass diese nur durch die Lichtdurchtrittsfläche geführt werden.

Die von der Abdeckfläche begrenzte Vertiefung ist dabei so ausgebildet, dass diese eine Falle für Verschmutzungen bildet, das heißt eine Ablagerung von Verschmutzungen in der Vertiefung ist gewünscht und wird durch eine geeignete geometrische Ausbildung der Vertiefung und der Abdeckfläche auch gefördert. Dabei ist die Lichtdurchtrittsfläche so weit über der Abdeckfläche angeordnet, dass sich auch starke Verschmutzungen allein auf der Abdeckfläche, nicht jedoch auf der Lichtdurchtrittsfläche ablagern.

Ein zweiter wesentlicher Aspekt der Erfindung besteht darin, dass die Lichtdurchtrittsfläche tiefer als der Rand der Randeinfassung liegt, das heißt gegenüber diesem zurückversetzt angeordnet ist. Damit ist die Lichtdurchtrittsfläche gegen unerwünschte direkte Objektkontakte geschützt. Wird beispielsweise ein zu detektierendes Objekt auf einem Segment des Gehäuses gefördert, in welchem die Optikabdeckung liegt, so ist durch die verschiedenen Höhenlagen des Randes der Randeinfassung einerseits und der Lichtdurchtrittsfläche andererseits gewährleistet, dass das Objekt nur in Kontakt mit dem Rand der Randeinfassung kommt, nicht jedoch mit der Lichtdurchtrittsfläche. Dadurch wird ein unerwünschter Abrieb des Objekts an der Lichtdurchtrittsfläche, der dort zu Ablagerungen führen würde, vermieden.

Erfindungsgemäß weist die Optikabdeckung ein aus transparentem Material bestehendes Segment auf, das über die nicht transparente Abdeckfläche der Optikabdeckung hervorsteht und deren vordere Randfläche die Lichtdurchtrittsfläche bildet. Der Querschnitt des Segments und der Lichtdurchtrittsfläche ist dabei vorteilhaft an den Strahlquerschnitten der Lichtstrahlen angepasst.

Gemäß einer ersten Variante bildet das Segment ein Optikfenster, das in einer Aussparung des Gehäuses liegt. In diesem Fall liegt das photoelektrische Element hinter diesem Optikfenster innerhalb des Gehäuses.

Alternativ kann das photoelektrische Element von einer Diode mit einer transparenten Umhüllung gebildet sein, wobei die Umhüllung das in einer Aussparung des Gehäuses liegende Segment bildet.

Bei beiden Varianten kann die Aussparung in einer Vertiefung des Gehäuses liegen, wobei die Grenzfläche der Vertiefung die nicht transparente Abdeckfläche bildet. Dabei bildet die Aussparung eine Vertiefung des Gehäuse.

In dieser Ausführungsform sind die Abdeckflächen und die Randeinfassung als Komponenten der Optikabdeckung vom Gehäuse des optischen Sensors selbst gebildet. In diesem Fall bilden das Segment in Form des Optikfensters oder der Umhüllung der das photoelektrische Element bildenden Diode ein zusätzliches Element der Optikabdeckung, das in das Gehäuse integriert wird.

Vorteilhaft hierbei ist, dass durch eine geeignete Ausbildung der Gehäuseform bereits wesentliche Funktionen der Optikabdeckung abgedeckt werden können. Insbesondere bei aus Kunststoffspritzgussteilen bestehenden Gehäusen ist ohne Mehrkosten eine hierfür erforderliche Formgebung des Gehäuses einfach durchführbar.

Gemäß einer vorteilhaften Variante der genannten Ausführungsform kann auch in die Vertiefung des Gehäuses eine das Segment umgebende, nicht transparente Vergussmasse eingebracht sein, deren Grenzfläche die Abdeckfläche bildet.

In einer weiteren vorteilhaften Ausführungsform der Erfindung können die einzelnen Komponenten der Optikabdeckung in einem Optikabdeckteil zusammengefasst sein, welches als Baueinheit schnell und einfach in einer Öffnung des Gehäuses eingebaut werden kann.

Die erfindungsgemäße Optikabdeckung kann für optische Sensoren unterschiedlicher Ausbildung wie Lichttaster, Lichtschranken, Reflexionslichtschranken oder Distanzsensoren eingesetzt werden.

Die Erfindung wird im Folgenden anhand der Zeichnungen erläutert. Es zeigen:
- Figur 1:: Schematische Darstellung eines als Gabellichtschranke ausgebildeten optischen Sensors.
- Figur 2:: Darstellung des optischen Sensors gemäß Figur 1 bei der Erkennung von Etiketten.
- Figur 3:: Erste Ausführungsform einer Optikabdeckung für den optischen Sensor gemäß den Figuren 1 und 2.
- Figur 4:: Zweite Ausführungsform einer Optikabdeckung für den optischen Sensor gemäß den Figuren 1 und 2.
- Figur 5:: Dritte Ausführungsform einer Optikabdeckung für den optischen Sensor gemäß den Figuren 1 und 2.
- Figur 6:: Vierte Ausführungsform einer Optikabdeckung für den optischen Sensor gemäß den Figuren 1 und 2.

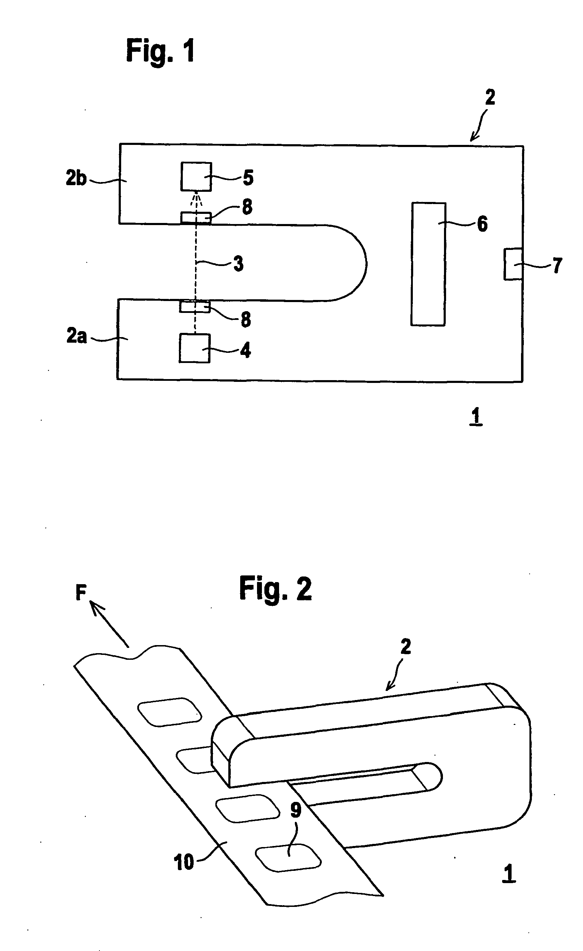

Figur 1 zeigt schematisch einen als Gabellichtschranke ausgebildeten optischen Sensor 1. Die Komponenten des optischen Sensors 1 sind in einem gabelförmigen Gehäuse 2 mit zwei parallel in Abstand zueinander verlaufenden Gabelarmen 2a, 2b angeordnet. Der optische Sensor 1 weist als photoelektrisches Element einen Lichtstrahlen 3 emittierenden Sender 4 und einen Lichtstrahlen 3 empfangenden Empfänger 5 auf. Der Sender 4 kann von einer Leuchtdiode, der Empfänger 5 von einer Photodiode gebildet sein. Zur Steuerung des Senders 4 und zur Auswertung der Empfangssignale ist eine Auswerteeinheit 6 vorgesehen, die von einem Microcontroller oder dergleichen gebildet ist. In der Auswerteeinheit 6 wird in Abhängigkeit der Empfangssignale des Empfängers 5 in der Auswerteeinheit 6 ein Objektfeststellungssignal generiert, welches über einen Schaltausgang 7 ausgegeben wird.

In dem durch die Gabelarme 2a, 2b begrenzten Erfassungsbereich können Objekte erfasst werden. Hierzu werden die vom Sender 4 emittierenden Lichtstrahlen 3 über eine erste in einer Gehäusewand integrierte Optikabdeckung 8 des unteren Gabelarms 2a in den Erfassungsbereich geführt. Die Lichtstrahlen 3 aus dem Erfassungsbereich gelangen über eine zweite in einer Gehäusewand des oberen Gabelarms 2b integrierten Optikabdeckung 8 zum Empfänger 5. Bei freiem Erfassungsbereich gelangen die vom Sender 4 emittierten Lichtstrahlen 3 ungehindert zum Empfänger 5. Ist ein Objekt im Erfassungsbereich, wird der Strahlengang der Lichtstrahlen 3 unterbrochen, so dass diese nicht mehr oder nur noch abgeschwächt auf den Empfänger treffen. Dies wird in der Auswerteeinheit 6 zur Generierung des Objektfeststellungssignals ausgewertet.

Wie aus Figur 2 ersichtlich, werden mit der Gabellichtschranke gemäß Figur 1 Etiketten 9 detektiert, die auf bandförmigen Trägermaterialien 10 in Abstand hintereinander angeordnet sind. Die bandförmigen Trägermaterialien 10 werden auf dem unteren Gabelarm 2a des Gehäuses des optischen Sensors 1 aufliegend in der in Figur 2 mit F bezeichneten Förderrichtung gefördert. Je nachdem, ob dabei die Lichtstrahlen 3 auf das Trägermaterial 10 mit oder ohne Etikette 9 treffen, werden die Lichtstrahlen 3 unterschiedlich stark geschwächt, was in der Ankopplungseinheit zur Generierung des Objektfeststellungssignals ausgewertet wird.

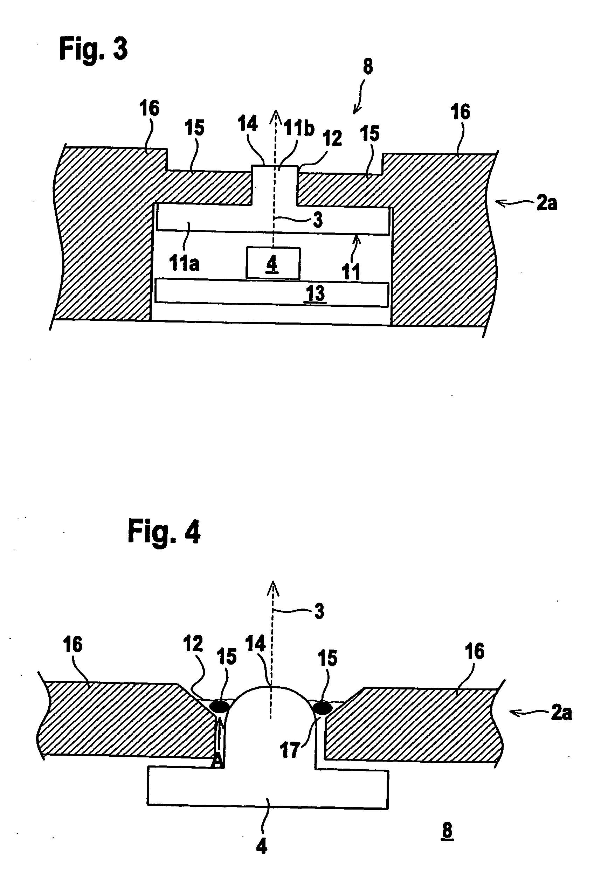

Figur 3 zeigt eine erste Ausführung einer Optikabdeckung 8, wobei dort die im unteren Gabelarm 2a angeordnete Optikabdeckung 8 dargestellt ist. Die im oberen Gabelarm 2b integrierte Optikabdeckung 8 ist vorzugsweise identisch hierzu ausgebildet. Dasselbe gilt auch für alle folgenden Ausführungsbeispiele. Als ein Element der Optikabdeckung 8 ist ein Optikfenster 11 vorgesehen, das einen plattenförmigen Sockel 11a und ein von dessen Oberseite hervorstehendes Zylindersegment 11b als lichtführendem Segment aufweist. Das Optikfenster 11 besteht aus für die Lichtstrahlen 3 transparentem Material. Das Zylinderelement des Optikfensters 11 steht von der Oberseite des Sockels 11a hervor, wobei die Längsachse des Zylindersegments 11b senkrecht zur Ebene der Sockeloberfläche orientiert ist. Der Durchmesser des Zylindersegments 11b ist an den Strahlquerschnitt der Lichtstrahlen 3 angepasst.

Wie aus Figur 3 ersichtlich, ist in der Gehäusewand an der Oberseite des unteren Gabelarms 2a eine Aussparung 12, das heißt eine Öffnung im Gehäuse vorgesehen, in welche das Zylindersegment 11b des Optikfensters 11 eingeführt und dort spielfrei gelagert ist. Der Sockel 11a liegt an der Innenwand der Gehäusewand an und ist dort mittels nicht dargestellter Befestigungsmittel lagefixiert. Unter dem Sockel 11a ist der Sender 4 auf einer Leiterplatte 13 angeordnet, so dass zum Sender 4 emittierte Lichtstrahlen 3 durch das Zylindersegment 11b aus dem Gehäuse geführt sind. Dabei bildet der ebene obere Rand des Zylindersegments 11b eine Lichtdurchtrittsfläche 14, durch welche die Lichtstrahlen 3 aus dem Optikfenster 11 austreten.

Die Lichtdurchtrittsfläche 14 steht über die Außenseite des Gehäuse, welches das Zylindersegmente 11b unmittelbar umgibt, hervor. Dieser Bereich des Gehäuses bildet eine Vertiefung gegenüber dem angrenzenden weiteren Bereich der Gehäusewand. Die Außenseite des Gehäuses im Bereich der Vertiefung bildet eine nicht transparente Abdeckfläche 15, die das Zylindersegment 11b des Optikfensters 11 umschließt. Die Außenseite der an die Abdeckfläche 15 anschließenden Gehäusewand bildet eine Randeinfassung, deren Rand 16 nicht nur gegenüber der Abdeckfläche 15 erhöht liegt, sondern auch gegenüber der Lichtdurchtrittsfläche 14, die ihrerseits erhöht bezüglich der Abdeckfläche 15 ist. Die von der Abdeckfläche 15 begrenzte Vertiefung bildet eine Schmutzfalte, das heißt in dieser wird gezielt in der Umgebung anfallender Schmutz gesammelt, wogegen an der Lichtdurchtrittsfläche 14 keine Schmutzablagerung erfolgt. Da der Rand der Randeinfassung gegenüber der Lichtdurchtrittsfläche 15 erhöht ist, schützt dieser die Lichtdurchtrittsfläche 14 gegen direkte Kontakte mit Objekten, im vorliegenden Fall dem Trägermaterial mit den Etiketten. Damit bilden sich an der Lichtdurchtrittsfläche 14 keine Ablagerungen infolge derartiger Objektkontakte. Die Abdeckfläche 15 erfüllt nicht nur die Funktion einer Schmutzfalle, sondern auch die einer Blende für die Lichtstrahlen 3.

Figur 4 zeigt eine Variante der Ausführungsform gemäß Figur 3. In diesem Fall ist der Sender 4 in Form einer Diode mit einer transparenten Umhüllung ausgebildet, wobei der Kopfteil der Diode direkt in die Aussparung 12 der Gehäusewand an der Oberseite des unteren Gabelarms 2a ragt. Die Aussparung 12 ist durch eine Abschrägung zur Außenseite des Gehäuses hin verbreitert. Der Kopfteil der Diode liegt mit geringem Spiel in der Aussparung 12. Zur Lagefixierung der Diode wird in die Aussparung 12, wie in Figur 4 dargestellt, eine nicht transparente Vergussmasse 17 eingefüllt. Der Rand 16 des über die Vergussmasse 17 hervorstehenden Teils des Kopfteils der Diode bildet die Lichtdurchtrittsfläche 14 für die Lichtstrahlen 3. Die Lichtdurchtrittsfläche 14 liegt wieder unterhalb des Randes 16 der Randeinfassung, die von dem an die Aussparung 12 anschließenden Teil der Außenseite der Gehäusewand gebildet ist. Der obere Rand 16 der Vergussmassenschicht bildet die Abdeckfläche 15 der Optikabdeckung, die analog zur Ausführungsform gemäß Figur 3 tiefer liegt als die Lichtdurchtrittsfläche 14. Der Bereich der Vergussmassenschicht bildet einerseits eine Schmutzfalle und andererseits eine Blende für die Lichtstrahlen 3.

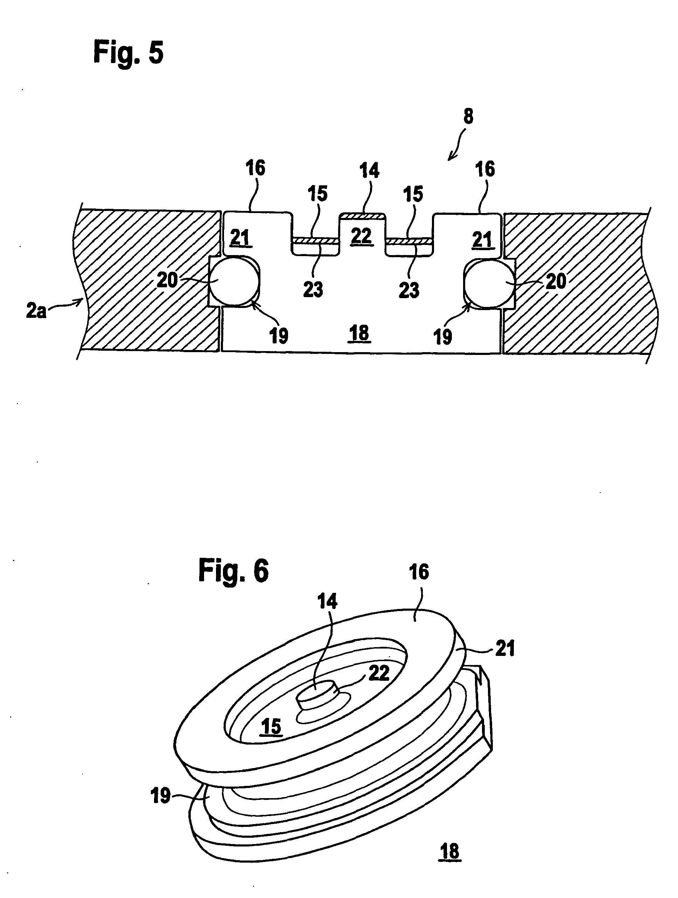

Figur 5 zeigt eine Ausführungsform, bei welcher die Randeinfassung und die Lichtdurchtrittsfläche 14 Bestandteil eines transparenten Optikabdeckteils 18 sind. Das Optikabdeckteil 18 weist einen rotationssymmetrischen Querschnitt auf und weist an seiner Mantelfläche eine in Umfangsrichtung verlaufende Ausnehmung 19 auf, in welche ein O-Ring 20 zur Fixierung des Optikabdeckteils 18 in einer Öffnung der Gehäusewand gelagert ist.

Unterhalb des Optikabdeckteils 18 ist der Sender 4 angeordnet, der in Figur 5 nicht gesondert dargestellt ist.

An der oberen Stirnseite ist die Randeinfassung in Form eines in Umfangsrichtung umlaufenden Randsegments 21 des Optikabdeckteils 18 vorgesehen. Die Oberseite der Randeinfassung bildet den Rand 16 der Optikabdeckung 8. Weiterhin ist ein zentrales zylindrisches Teilstück 22 des Optikabdeckteils 18 vorgesehen, welches von der ebenen Stirnseite des Optikabdeckteils 18 hervorsteht. Der obere Rand 16 des Teilstücks bildet die Lichtdurchtrittsfläche 14, die geringfügig tiefer liegt als der Rand 16 der Randeinfassung. Zwischen dem Randsegment 21 und dem Teilstück 22 ist eine Vertiefung gebildet. In diese ist als Blende ein Blechteil 23 eingelegt. Dessen Oberseite bildet zugleich die Abdeckfläche 15, das heißt die Schmutzfalle zum Auffangen von Verschmutzungen. Die Abdeckfläche 15 liegt wieder tiefer als die Lichtdurchtrittsfläche 14, durch welche die durch das Teilstück des Optikabdeckteils 18 geführten Lichtstrahlen 3 austreten.

Figur 6 zeigt eine Abwandlung des Optikabdeckteils 18 gemäß Figur 5. Auch das Optikabdeckteil 18 gemäß Figur 6 besteht aus transparentem Material. An der Mantelfläche ist wiederum eine in Umfangsrichtung umlaufende Ausnehmung 19 vorgesehen, in welche ein nicht dargestellter O-Ring zur Fixierung in der Gehäusewand des optischen Sensors 1 einführbar ist. Analog zur Ausführungsform gemäß Figur 5 ist an der Oberseite des Optikabdeckteils 18 das die Randeinfassung mit dem Rand 16 bildende Randsegment 21 sowie das von der Lichtdurchtrittsfläche 14 begrenzte zylindrische Teilstück vorgesehen. Die Lichtdurchtrittsfläche 14 liegt wieder tiefer als der Rand 16 der Randeinfassung. Zwischen der Lichtdurchtrittsfläche 14 und dem Rand 16 liegt ein ebenes Flächensegment der Stirnseite des Optikabdeckteils 18, welches bezüglich der Lichtdurchtrittsfläche 14 und dem Rand 16 tiefer liegt und die Abdeckfläche 15 bildet. Damit die Abdeckfläche 15 eine Blendenfunktion erfüllt, ist diese mit nicht transparentem Material bedruckt.

### Bezugszeichenliste

- (1): Optischer Sensor
- (2a): unterer Gabelarm
- (2b): oberer Gabelarm
- (3): Lichtstrahler
- (4): Sender
- (5): Empfänger
- (6): Auswerteeinheit
- (7): Schaltausgang
- (8): Optikabdeckung
- (9): Etiketten
- (10): Trägermaterial
- (11): Optikfenster
- (11a): Sockel
- (11b): Zylindersegment
- (12): Aussparung
- (13): Leiterplatte
- (14): Lichtdurchtrittsfläche
- (15): Abdeckfläche
- (16): Rand
- (17): Vergussmasse
- (18): Optikabdeckteil
- (19): Ausnehmung
- (20): O-Ring
- (21): Randsegment
- (22): Teilstück
- (23): Blechteil

## Patentansprüche

1. Optischer Sensor zur Erfassung von Objekten mit einem in einem Gehäuse integrierten Lichtstrahlen emittierenden photoelektrischen Element und einem Lichtstrahlen empfangenden photoelektrischen Element, wobei jedem photoelektrischen Element eine Optikabdeckung (8) vorgeordnet ist, sowie einer im Gehäuse integrierten Auswerteeinheit, in welcher ein Objektfeststellungssignal generiert wird, **dadurch gekennzeichnet,**
**dass** die Objektabdeckung (8) ein von ihrer ebenen Oberseite hervorstehendes zylindrisches Segment aufweist, dessen oberer Rand eine Lichtdurchtrittsfläche (14) bildet, durch welche die Lichtstrahlen geführt sind und deren Querschnitt an den Strahlquerschnitt der Lichtstrahlen angepasst ist,
**dass** das zylindrische Segment von einer Abdeckfläche (15) umschlossen ist, wobei die Lichtdurchtrittsfläche (14) über die Abdeckung so hervorsteht, dass sich auch starke Verschmutzungen allein auf der Abdeckfläche (15) nicht jedoch auf der Lichtdurchtrittsfläche (14) ablagern,
und **dass** eine die Abdeckfläche (15) umschließende Randeinfassung vorgesehen ist, die einen über die Abdeckfläche (15) und die Lichtdurchtrittsfläche (14) hervorstehenden Rand (16) aufweist, so dass ein Objekt nur in Kontakt mit dem Rand (16) der Randeinfassung kommt, nicht jedoch mit der Lichtdurchtrittsfläche (14).

2. Optischer Sensor nach Anspruch 1, **dadurch gekennzeichnet, dass** das die Abdeckfläche (15) bildende Material nicht transparent für die Lichtstrahlen (3) ist.

3. Optischer Sensor nach einem der Ansprüche 1 oder 2, **dadurch gekennzeichnet, dass** die Randeinfassung von dem an die Vertiefung anschließenden Segment des Gehäuses gebildet ist.

4. Optischer Sensor nach einem der Ansprüche 1 bis 3, **dadurch gekennzeichnet, dass** die Lichtdurchtrittsfläche (14) und die Randeinfassung Bestandteile eines Optikabdeckteils (18) sind.

5. Optischer Sensor nach einem der Ansprüche 1 bis 4, **dadurch gekennzeichnet, dass** die Randeinfassung und das zylindrische Segment mit der Lichtdurchtrittsfläche (14) an einer Stirnseite des Optikabdeckteils (18) angeordnet sind, wobei zwischen der Randeinfassung und dem Segment eine Vertiefung vorgesehen ist, deren Grenzfläche die Abdeckfläche (15) bildet.

6. Optischer Sensor nach einem der Ansprüche 1 bis 5, **dadurch gekennzeichnet, dass** das Optikabdeckteil (18) aus transparentem Material besteht.

7. Optischer Sensor nach Anspruch 6, **dadurch gekennzeichnet, dass** auf der Vertiefung eine nicht transparente Schicht angeordnet ist, welche die Abdeckfläche (15) bildet, wobei die nicht transparente Schicht von einer Bedruckung oder einem Blechteil (23) gebildet ist.

8. Optischer Sensor nach einem der Ansprüche 1 bis 7, **dadurch gekennzeichnet, dass** dieser als Gabellichtschranke ausgebildet ist.

## Claims

1. Optical sensor for detecting objects with a photoelectric element integrated in a housing and emitting light beams and with a photoelectric element receiving light beams, wherein an optical cover (8) is arranged in front of each photoelectric element, as well as an evaluating unit which is integrated in the housing and in which an object detection signal is generated, **characterised in that**
the object cover (8) comprises a cylindrical segment, which protrudes from the planar upper side of the cover and the upper edge of which forms a light passage through which the light beams are guided and the cross-section of which is matched to the beam cross-section of the light beams,
the cylindrical segment is surrounded by a cover surface (15), wherein the light passage surface (14) so protrudes beyond the cover that even strong contaminations settle solely on the cover surface (15), but not on the light passage surface (14), and
an edge mount enclosing the cover surface (15) is provided and has an edge (16) protruding beyond the cover surface (15) and the light passage surface (14) so that an object comes into contact only with the edge (16) of the edge mount, but not with the light passage surface (14).

2. Optical sensor according to claim 1, **characterised in that** the material forming the cover surface (15) is non-transparent to the light beams (3).

3. Optical sensor according to one of claims 1 and 2, **characterised in that** the edge mount is formed by the segment of the housing adjoining the depression.

4. Optical sensor according to any one of claims 1 to 3, **characterised in that** the light passage surface (14) and the edge mount are components of an optical system cover part (18).

5. Optical sensor according to any one of claims 1 to 4, **characterised in that** the edge mount and the cylindrical segment together with the light passage surface (14) are arranged at an end face of the optical system cover part (18), wherein provided between the edge mount and the segment is a depression, the boundary surface of which forms the cover surface (15).

6. Optical sensor according to any one of claims 1 to 5, **characterised in that** the optical system cover part (18) consists of a transparent material.

7. Optical sensor according to claim 6, **characterised in that** arranged on the depression is a non-transparent layer forming the cover surface (15), wherein the non-transparent layer is formed by a printing or a sheet-metal part (23).

8. Optical sensor according to any one of claims 1 to 7, **characterised in that** this is formed as a forked light barrier.

## Revendications

1. Capteur optique pour la détection d'objets comprenant un élément photoélectrique émettant des rayons lumineux intégré dans un boîtier et un élément photoélectrique recevant des rayons lumineux, un recouvrement optique (8) étant placé devant chaque élément photoélectrique, ainsi qu'une unité d'évaluation intégrée dans le boîtier, dans laquelle un signal de détection d'objet est généré, **caractérisé en ce**
**que** le recouvrement optique (8) présente un segment cylindrique en saillie par rapport à son côté supérieur plan, dont le bord supérieur forme une surface de passage de lumière (14) à travers laquelle les rayons lumineux sont guidés et dont la section transversale est adaptée à la section transversale de faisceau des rayons lumineux,
**que** le segment cylindrique est entouré par une surface de recouvrement (15), la surface de passage de lumière (14) étant en saillie par rapport au recouvrement de façon que même les fortes salissures se déposent seulement sur la surface de recouvrement (15) et pas sur la surface de passage de lumière (14),
et **qu'**il est prévu un encadrement périphérique entourant la surface de recouvrement (15), qui présente une bordure (16) en saillie par rapport à la surface de recouvrement (15) et la surface de passage de lumière (14), de façon qu'un objet vienne en contact seulement avec la bordure (16) de l'encadrement périphérique et pas avec la surface de passage de lumière (14).

2. Capteur optique selon la revendication 1, **caractérisé en ce que** le matériau formant la surface de recouvrement (15) n'est pas transparent pour les rayons lumineux (3).

3. Capteur optique selon une des revendications 1 ou 2, **caractérisé en ce que** l'encadrement périphérique est formé par le segment du boîtier qui se raccorde au renfoncement.

4. Capteur optique selon une des revendications 1 à 3, **caractérisé en ce que** la surface de passage de lumière (14) et l'encadrement périphérique sont des composants d'une pièce de recouvrement optique (18).

5. Capteur optique selon une des revendications 1 à 4, **caractérisé en ce que** l'encadrement périphérique et le segment cylindrique avec la surface de passage de lumière (14) sont disposés sur une face d'extrémité de la pièce de recouvrement optique (18), un renfoncement dont la surface limite forme la surface de recouvrement (15) étant prévu entre l'encadrement périphérique et le segment.

6. Capteur optique selon une des revendications 1 à 5, **caractérisé en ce que** la pièce de recouvrement optique (18) est composée d'un matériau transparent.

7. Capteur optique selon la revendication 6, **caractérisé en ce qu'**une couche non transparente est disposée sur le renfoncement, laquelle forme la surface de recouvrement (15), la couche non transparente étant formée par une impression ou une pièce de tôle (23).

8. Capteur optique selon une des revendications 1 à 7, **caractérisé en ce que** celui-ci est réalisé sous la forme d'une barrière photoélectrique à fourche.
